# EUROPEAN PATENT SPECIFICATION

(11) **EP 1 018 352 B1**
(45) Date of publication and mention of the grant of the patent: **30.03.2005**
(21) Application number: 00100082.7
(22) Date of filing: 05.01.2000
(51) Int. Cl.: A63F 13/10, A63F 13/00

(54) **Recording medium on which video game program is recorded, and video game device**
Aufzeichnungsmedium, auf dem ein Videospielprogramm gespeichert ist, und Videospielvorrichtung
Support d'enregistrement pour programme de jeu vidéo et appareil de jeu vidéo

(30) Priority: 06.01.1999 JP 138699
(43) Date of publication of application: 12.07.2000
(73) Proprietor: Konami Co., Ltd., Kobe-shi, Hyogo-ken (JP)
(72) Inventor: Shimomura, Satoshi, Tama-shi,Tokyo (JP); Shimo, Satoshi, Douguchihiruta, Kasukabe-shi, Saitama (JP); Kamio, Masafumi, Chofu-shi, Tokyo (JP)
(74) Representative: VOSSIUS & PARTNER

(56) References cited:
- EP-A- 0 836 871
- WO-A-83/02566
- US-A- 5 417 425
- PATENT ABSTRACTS OF JAPAN vol. 1997, no. 12, 25 December 1997 (1997-12-25) & JP 09 215863 A (TAITO CORP), 19 August 1997 (1997-08-19)

## Description

The present invention relates to a recording medium on which a video game program is recorded, and to a video game device.

One of the many genres of video games is a type of puzzle game that works as follows. With this type of game, blocks fall one after the other from the top of the screen and stack up at the bottom of the screen, with the game being over when the blocks stack all the way up to the top of the screen. A property of the blocks is that they disappear when their stacking meets a specific condition (hereinafter referred to as block erasure condition). The player cannot move the blocks that are already stacked, but is able to control the currently falling block a certain amount. The main objective of the player is to erase the blocks by moving them as they fall such that they will satisfy the block erasure condition after falling, and to keep the game going by erasing the blocks faster than the speed at which they stack up. Points are earned when the block erasure condition is met, but usually there are a plurality of block erasure conditions, with points being added according to the difficulty factor. Thus, the player strives to earn more points before the game is over by erasing the blocks while satisfying block erasure conditions that give more points.

This type of video game is sometimes called a falling object puzzle, and this Specification will follow that custom by hereinafter referring to a falling object puzzle. Since the processing involves erasing blocks that have met the block erasure condition, a falling object puzzle can only be executed virtually by a data processor. It is on this point that a falling object puzzle differs from other puzzles such as jigsaw puzzles.

With a typical conventional falling object puzzle disclosed e.g. in the document JP-A-09 215 863, the blocks fall from the top of the screen in units of block groups made up of a plurality of blocks. The block groups fall one at a time, and when one block group lands at the bottom of the screen or on other blocks that have already fallen, the next block group falls. The degree of difficulty of the game varies with the falling speed of the blocks. The player can shift the falling trajectory of the block groups to the left or right on the screen. The block groups can also be rotated during their fall. This rotation sometimes involves rotating the block group in a plane (the screen), changing the order in which the blocks that make up the block group are lined up, etc.

With a conventional falling object puzzle, there is a strong mental element to the game that requires a player to determine how the falling blocks should be arranged with respect to the blocks that are already stacked up, and to move the blocks accordingly. With a game such as this, a novice player can enjoy arranging the blocks through trial and error, but a player with a certain amount of experience will end up memorizing as a pattern the best way to arrange the new blocks with respect to the stacked blocks, so the game settles into a mental routine. Once this mental routine has been established, the player begins to move the blocks by uninteresting conditioned reflex, making the game feel extremely monotonous.

Also, it is common with a conventional falling object puzzle for background music, sound effects, or other such audio to be outputted via a speaker or other such audio output device at the same time the game is displayed on the screen. This audio provides a dramatic effect that heightens the pleasure of the player, but this effect is nothing more than a backdrop, and is not an essential element for solving the falling object puzzle.

In light of the conventional falling object puzzles discussed above, it is an object of the present invention to provide a video game device and a recording medium on which a video game program is recorded, in which a falling object puzzle that incorporates sounds with a rhythm pattern as an element of the game that is essential in solving the falling object puzzle, and that demands good reflexes, where the player must operate the game according to the rhythm pattern, is executed by a data processor equipped with a display device, an audio output device, and an input device for accepting the operation by the player.

To achieve this object, the present invention provides the following video game device and recording medium on which a video game program is recorded, as set out in appended data carrier claim 1 and apparatus claim 8.

First, the present invention provides a computer-readable storage medium which records a video game program to be executed by a game device which comprises a data processor, an input device, and a display device for displaying blocks, the video game program being for executing a video game such that blocks fall from the top of a screen and are stacked at the bottom of the screen, each of the blocks having a pre-assigned block attribute which determines a type of each block, the stacked blocks being erased when a specific block erasure condition is met, the video game program comprising the steps of generating sounds in a specific rhythm pattern, dropping a block from the top of the screen of the display device at a timing corresponding to the rhythm pattern, deciding whether a key input is given from the input device at a time instant when the block passes an input decision region provided at a specific location within the screen, assigning the block attribute corresponding to the inputted key to the block passing through the step of deciding, regardless of the block attribute that was pre-assigned, when it is decided in the step of deciding that the key input is given at the time instant, and, otherwise, assigning no block attribute of the block, and evaluating the block erasure condition on the basis of the layout of the stacked blocks and the block attribute to erase each block when it satisfies the block erasure condition from the screen of the display device.

The blocks fall from the top of the screen along one or a plurality of lanes set perpendicular to the bottom of the screen. The provision of a plurality of lanes allows various block erasure conditions to be set.

A typical block erasure condition is that a plurality of blocks having the same block attribute be adjacent for at least a predetermined number either vertically, horizontally, or diagonally.

The location of a block may be displayed in a specific region within the screen, while the block attribute of this block is not displayed. In this case, the player cannot determine the block attribute until the block comes out of a specific region, which maintains a favorably high level of tension during the game.

The video game program may further comprise a step in which communication is performed between a plurality of video game devices operating according to this video game program, and a plurality of players may play at the same time. In this case, if there are further included a step in which a signal is transmitted to the other video game devices to notify them when the predetermined block erasure condition is satisfied, and a step in which blocks are dropped in addition to the blocks falling at a timing corresponding to the rhythm pattern when a signal is received from the other video game devices, then the players will be able to compete against one another, making the game more competitive.

Also, as another video game program for allowing the simultaneous play of a plurality of players, there may be further included a step in which the video game program is executed for each of a plurality of regions into which a single video game device has been divided, and communication performed between one of the plurality of regions and the other regions.

Second, the present invention provides a video game device comprising an input device for converting the operation by a player into signals, an audio output device for making sounds according to a specific rhythm pattern, a display device for displaying blocks that fall from the top of the screen at a timing corresponding to the rhythm pattern and stack up at the bottom of the screen and for displaying an input decision region provided at a specific location within the screen, a portion for assigning to the blocks a block attribute indicating the type, an input decision portion for deciding whether there has been input from the input device while a block passes through the input decision region, a portion for assigning to the block passing through the input decision region a block attribute corresponding to the inputted key, regardless of the block attribute that was preassigned, when it is decided by the input decision portion that there has been a key input, and not affecting the block attribute of the block when it is decided by the input decision portion that there is no key input, and a portion for evaluating block erasure condition on the basis of the layout of the stacked blocks and the block attributes, and erasing from the screen of the display device any blocks that satisfy the block erasure condition.

A typical block erasure condition is that a plurality of blocks having the same block attribute be adjacent for at least a predetermined number either vertically, horizontally, or diagonally.

The location of a block may be displayed in a specific region within the screen, while the block attribute of this block is not displayed. In this case, the player cannot determine the block attribute until the block comes out of a specific region, which maintains a favorably high level of tension during the game.

The video game device may further comprise a portion for communicating with other video game devices. Alternatively, it may comprise a plurality of input devices, display devices, and audio output devices corresponding to a plurality of players. In this case, a plurality of players can play at the same time, making the game even more interesting.
Fig. 1 is an oblique view of a portable game machine 110 that is favorable for executing the game program of the present invention;
Fig. 2 is a function block diagram of the portable game machine 110;
Fig. 3 is a function block diagram of a video game device 300 that is favorable for executing the game program of the present invention;
Fig. 4 is an example of the controller 352 of the video game device 300;
Fig. 5 is the main component 500 of the screen display of the falling object puzzle of the present invention;
Fig. 6 is a flow chart illustrating the block fall processing;
Fig. 7 is the main component 500 of the screen display of the falling object puzzle of the present invention;
Fig. 8 is a flow chart illustrating the block fall processing;
Fig. 9 is the main component 500 of the screen display of the falling object puzzle of the present invention;
Fig. 10 is the main component 500 of the screen display of the falling object puzzle of the present invention;
Fig. 11 is a flow chart illustrating the block erasure processing;
Figs. 12A through 12D are diagrams illustrating the process of block erasure;
Fig. 13 is another example of the screen display of the falling object puzzle of the present invention.

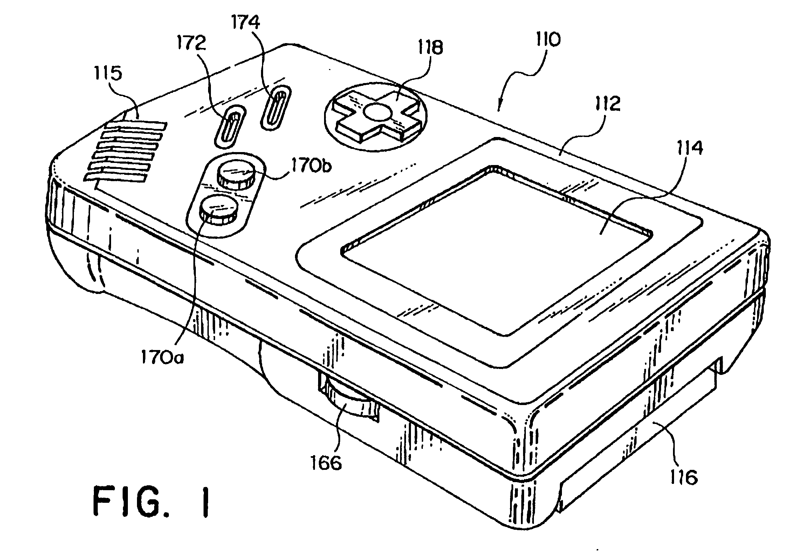

The human interface of a portable game machine 110 that is favorable for the execution of the falling object puzzle of the present invention will be described through reference to Fig. 1.

The portable game machine 110 includes a case 112, and the top of the case 112 is provided with an LCD (Liquid Crystal Display) panel 114 in which the display segments are in a dot array according to a dot matrix system. Slits 115 are also provided to the case 112, underneath which is provided a speaker.

An insertion slot 168 (not shown) is provided to the upper rear surface of the LCD panel 114 of the case 112, and an external ROM cassette 116 is detachably installed in this insertion slot 168. A 32-pin connector 120, for example, is provided to the insertion slot 168, and when the external ROM cassette 116 is inserted into the insertion slot 168, a connector (not shown) provided to the external ROM cassette 116 engages with the connector 120 and electrically connects the portable game machine 110 to the external ROM cassette 116. Thus, the external ROM cassette 116 is removably installed in the portable game machine 110.

An external ROM 116a (not shown) is housed in the external ROM cassette 116, and game program data is stored in this external ROM 116a. When the external ROM cassette 116 is installed in the portable game machine 110, the game program data is executed, the LCD panel 114 displays game images, and sounds are outputted from the slits 115 or from headphones connected to a headphone jack (not shown).

A cross key switch 118, push-button switches 170a and 170b, a start switch 172, and a selector switch 174 are provided below the LCD panel 114 on the top side of the case 112 as a part of an input device for the person playing the game on the portable game machine 110 (hereinafter referred to as the player) to perform operations related to the game.

The cross key switch 118 consists of four buttons 118a to 118d indicating up, down, left, and right, and is generally used to input the direction in the game as displayed on the LCD panel 114. As will be described in detail below, however, this control is used differently with the falling object puzzle of the present invention.

There are two push-button switches 170a and 170b below the LCD panel 114 on the top side of the case 112. These switches are operated to perform some kind of manipulation of the game characters displayed on the LCD panel 114. To give an example, with a game of a genre other than a falling object puzzle, a character being manipulated by the player jumps when the push-button switch 170a is pressed, and throws a rock when the push-button switch 170b is pressed. With a conventional falling object puzzle, this button is used to rotate the blocks as they fall. As mentioned above, however, it has a different significance with the present invention.

The start switch 172 and selector switch 174 are further provided on the top of the case 112 of the portable game machine 110. The selector switch 174 is used to select the type of game displayed on a menu screen, and the start switch 172 is used to start this selected game. Therefore, there is no need to operate the start switch 172 or selector switch 174 during the game. Since a pause function is added to the start switch 172, however, there may be times when the start switch 172 is pressed if the player wants to halt the game temporarily. The start switch 172 is pressed once more to restart the game after a pause. In addition, there may be cases when the start switch 172 and selector switch 174 are assigned operations in which the timing in which they are depressed has no major effect on the progress of the game. For instance, in so-called role playing games, an operation that changes the equipment of a character is sometimes allocated to these switches since it will have almost no effect on the progress of the game if the depression timing is off by a few seconds.

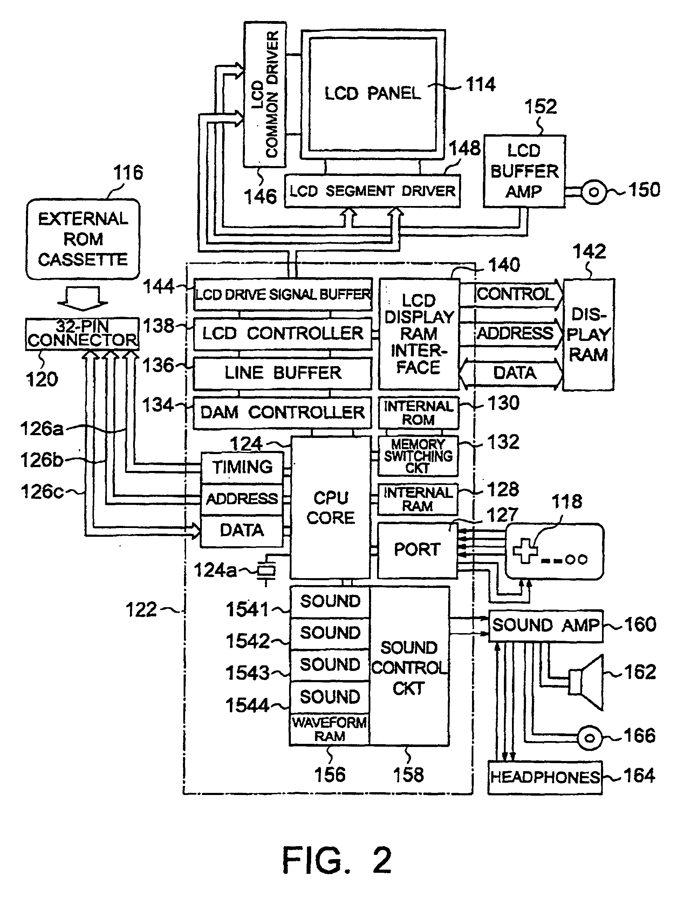

Next, the screen display of the portable game machine 110 will be described. Referring to Fig. 2, the above-mentioned external ROM cassette 116 is connected by the 32-pin connector 120 to a CPU 122 housed inside the case 112. The CPU 122 includes a CPU core 124, and this CPU core 124 is connected to the 32-pin connector 120 by buses 126a, 126b, and 126c. The CPU core 124 is therefore connected to the external ROM cassette 116 when the external ROM cassette 116 is installed.

A key matrix, such as the cross key switch 118 shown in Fig. 1, is further connected via a port 127 to the CPU core 124. An internal RAM 128 and an internal ROM 130 are provided for the CPU core 124. The internal ROM 130 is accessed by the CPU core 124 only when a first memory space has been selected by a memory switching circuit 132.

The CPU core 124 outputs display data to an LCD controller 138 via a line buffer 136 under the control of a DMA controller 134. The LCD controller 138 is connected to a display RAM 142 via an LCD display RAM interface 140. The display RAM 142 includes character RAM and VRAM, although these are not shown. The LCD controller 138 therefore converts the display data outputted from the CPU core 124 into an LCD drive signal from the display RAM 142. Specifically, the display data from the CPU core 124 specifies the address of the character RAM and VRAM, character signals and object (background) signals are outputted from the character RAM and VRAM, and these signals are combined by the LCD controller 138 into the LCD drive signal.

This LCD drive signal is then provided to an LCD common driver 146 and an LCD segment driver 148 via an LCD drive signal buffer 144. Therefore, images corresponding to the display data from the CPU core 124 are displayed on the LCD panel 114 by the LCD common driver 146 and the LCD segment driver 148.

A brightness control 150 is further provided, and this brightness control 150 is connected to an LCD buffer amp 152. The brightness of the LCD panel 114 can therefore be adjusted by operating the brightness control 150.

Next, the audio output of the portable game machine 110 will be described. Again referring to Fig. 2, an oscillation circuit 124a is connected to the above-mentioned CPU core 124, and different types of sound source signals are produced by sound circuits 1541, 1542, 1543, and 1544 upon the receipt of the output of this oscillation circuit 124a.

The sound circuits 1541 to 1544 are provided with a waveform RAM 156. This waveform RAM 156 is used to decide on the tone of the sound source signals outputted from the sound circuits 1541 to 1544. For example, a waveform pattern of 4 bits x 32 steps is stored, and this waveform pattern is provided as a tone signal to the sound circuits 1541 to 1544.

The various sound source signals outputted from the sound circuits 1541 to 1544 are processed by a sound control circuit 158, and outputted as two audio signals that simulate stereo sound. The two audio signals outputted from the sound control circuit 158 are amplified by a sound amp 160, after which they are provided to a speaker 162 or to headphones 164. The sound amp 160 is provided with a volume control 166.

Next, a video game device 300 that is favorable for the execution of the falling object puzzle of the present invention will be described. The video game device 300 reads the program and data stored on a recording medium such as an optical disk, and outputs images and sounds to the player. The player can play a game or the like by input from a controller.

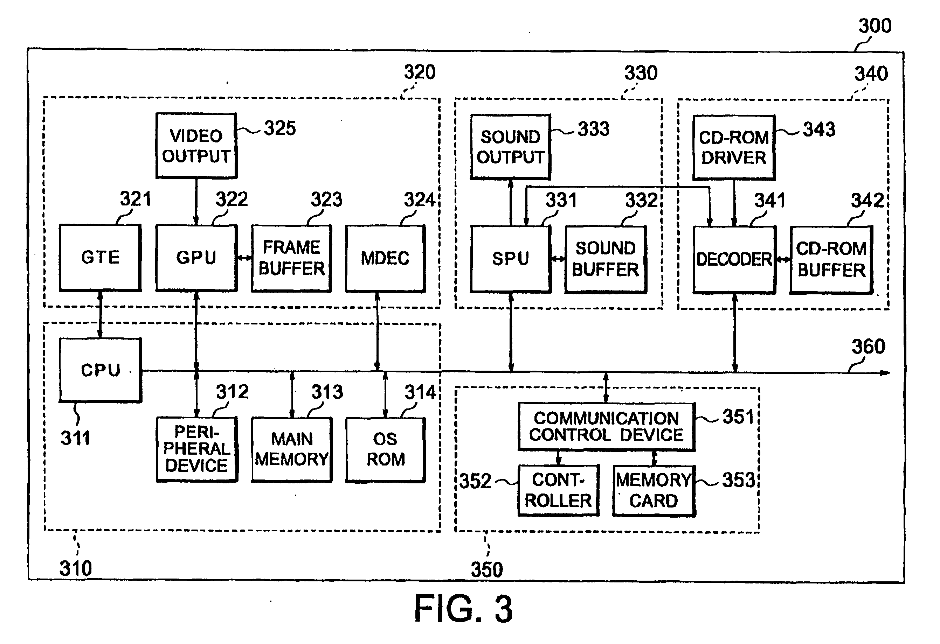

The structure of the video game device 300 will be briefly described through reference to Fig. 3. The video game device 300 comprises a controller 310 that controls the operation of the overall device, a video processor 320 that performs processing related to video display, an audio processor 330 that performs processing related to audio output, an auxiliary memory controller 340 that reads programs and data from a recording medium, a communication controller 350 that reads and writes data such as the player's operations, game settings, and game progress, and controls the input and output of other data, and a main bus 360 that connects everything from the above-mentioned controller 310 to the communication controller 350.

The internal structure from the controller 310 to the communication controller 350 will now be described.

The controller 310 is equipped with a CPU 311, a peripheral device controller 312 that performs controls such as interrupt control, time control, memory control, and direct memory access (DMA) transfer, a main memory 313 consisting of RAM, and a ROM 314 loaded with a program such as an operating system (OS) for managing the main memory 313, the video processor 320, the audio processor 330, etc. The CPU 311 controls the overall device by executing the OS stored in the ROM 314. The CPU 311 is also loaded with command cache and scratch pad memory and manages real memory.

The video processor 320 comprises a geometry transfer engine (GTE) 321 consisting of a coordinate calculation coprocessor that performs processing such as coordinate transformation, a graphics processing unit (GPU) 322 that performs drawing according to draw commands from the CPU 311, a frame buffer 323 that stores the images drawn by the GPU 322, an image decoder (MDEC) 324 that decodes image data that has undergone an orthogonal transform such as discrete cosine transformation and has also been compressed and coded, and a video output device 325 such as a display device.

The audio processor 330 comprises a sound playback processor (SPU) 331 that generates sounds on the basis of instructions from the CPU 311, a sound buffer 332 that stores sound source data or data such as music or sounds read from a CD-ROM, and a sound output device 333 such as a speaker and an amplifier for outputting sound generated by the SPU 331.

The auxiliary memory controller 340 comprises a CD-ROM driver 343 that plays back data, programs, and the like stored on a CD-ROM disk, a decoder 341 that decodes data, programs, and the like stored with an error correction (ECC) symbols added thereto, for example, and a CD-ROM buffer 342 that temporarily stores playback data from the CD-ROM driver 343.

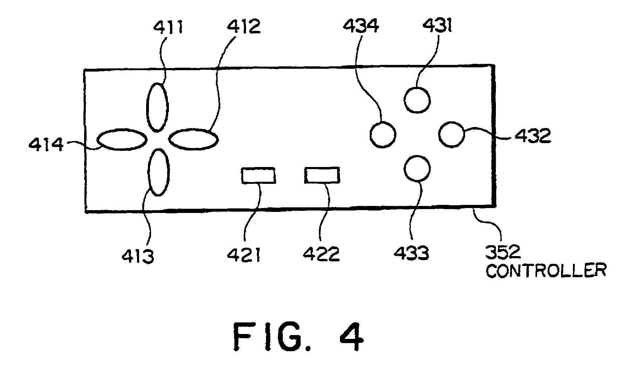

The communication controller 350 comprises a communication control device 351 that controls communication with the CPU 311 via the main bus 360, a controller 352 that inputs instructions from the user, a memory card 353 that stores game settings and the like, a parallel input/output (I/O) port 354 connected to the main bus 360, and an asynchronous serial input/output (I/O) port 355 also connected to the main bus 360. The controller 352 is the device shown in Fig. 4, for example. With a standard game, the four key switches 411 to 414 on the left side perform input related to direction, and carry the functions corresponding to the cross key switch 118 in the above-mentioned portable game machine 110. Similarly, the four push-buttons 431 to 434 on the right side correspond to the push-button switches 170a and 170b, while the start switch 421 and selector switch 422 correspond to the start switch 172 and selector switch 174, respectively.

Next, the operation of the video game device 300 will be briefly described.

When the power is turned on to the video game device 300, the OS stored in the ROM 314 is executed by the CPU 311, and the video processor 320, audio processor 330, and so on come under the control of the OS. First, the OS executes the overall device initialization such as operation confirmation, after which it controls the auxiliary memory controller 340 and executes programs such as games stored on a CD-ROM. Thereafter, the CPU 311 controls the video processor 320, audio processor 330, and so on according to the input of the player through the controller 352 and the executed program, so that images are displayed by the video output device 325, and audio such as sound effects or music is outputted by the sound output device 333.

The portable game machine 110 and the video game device 300 were described above as examples of game devices applicable to the present invention, but the present invention can, of course, also be applied to any data processor equipped with a unit for displaying images, a unit for outputting audio, and a unit for receiving input from the user, such as a personal computer, a work station, or a commercial-use game machine.

Next, the falling object puzzle of the present invention will be described through reference to the figures. In the following description, the cross key switches 118 in the portable game machine 110 and the key switches 411 to 414 in the video game device 300 shall be referred to collectively as directional keys, and individually as the up key, right key, down key, and left key. Similarly, the push-button switches 170a and 170b and the push-button switches 431 to 434 shall be collectively referred to as action keys, with the push-button switches 170a and 431 called A keys, 170b and 432 B keys, 433 a C key, and 434 a D key. Similarly, the start switches 172 and 421 will merely be called start switches, and the selector switches 174 and 422 merely selector switches.

The video game program of the present invention is stored on the recording medium comprising a CD-ROM or the external ROM cassette 116. The start-up screen of the game is displayed when these recording media are set in the portable game machine 110 or the video game device 300. The game then starts when the player presses the start switch.

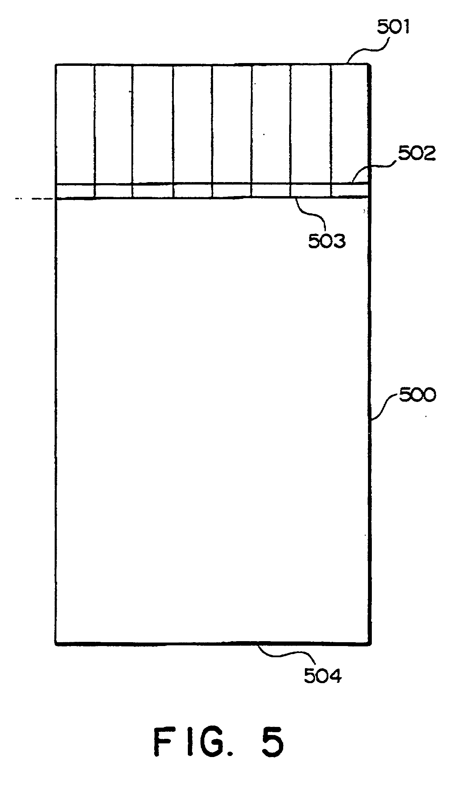

The main screen configuration of the falling object puzzle of the present invention will be described through reference to Fig. 5. The main component 500 of the falling object puzzle is a rectangular region, including a screen top 501, an input decision region top 502, an input decision region bottom 503, and a screen bottom 504. The input decision region here is a flat, that is, two-dimensional, region bounded by two straight lines (the input decision region top 502 and the input decision region bottom 503), but may instead be a one-dimensional region, that is, a straight line. When the game begins, blocks fall one after another from the screen top 501 to the screen bottom 504, stacking up at the screen bottom 504 or on top of other blocks that have already landed. Up to this point, everything is the same as in a conventional falling object puzzle. One of the characteristic features of the falling object puzzle of the present invention is that an input decision region bounded by the input decision region top 502 and the input decision region bottom 503 is present between the screen top 501 and the screen bottom 504. Also, the course over which the blocks fall can be shifted to the right or left with a conventional falling object puzzle, but with the falling object puzzle of the present invention a block cannot be moved to the right or left even if it is still falling. The blocks fall between straight lines extending like the teeth of a comb between the screen top 501 and the screen bottom 504, and over extensions thereof In the following description, the spaces between these straight lines and extensions thereof shall be called lanes, referred to as the first lane, second lane, and so forth starting from the lane on the left. The main component 500 has eight lanes, so they go up to the eighth lane.

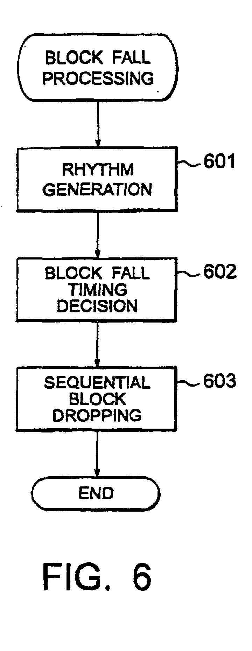

Referring to Fig. 6, the falling of the blocks begins after the display of the main component 500, but prior to the blocks falling, a rhythm pattern made up of a series of sounds equivalent to the number of the lane is outputted from the audio output device (the speaker 162, etc., in the portable game machine 110, and the sound output device 333 in the video game device 300) (step 601). This rhythm pattern plays an important role in solving the falling object puzzle of the present invention. Naturally, it is also possible for background music or sound effects that dramatize the game to be played at the same time as the rhythm pattern.

After the sounds have been played according to the rhythm pattern, the timing of the block descent is determined on the basis of the rhythm pattern (step 602), and blocks begin to fall from the screen top 501 (step 603). The blocks fall at a rate of one per lane, in order from the first to the eighth lane, with the timing at which the blocks fall matching the above-mentioned rhythm pattern. For example, if a second sound is generated 1.5 seconds after the first sound of the rhythm pattern series, then a block will fall from the second lane 1.5 seconds after a block has fallen from the first lane. In other words, in the case of the screen main component 500, a rhythm pattern made up of eight sounds serves to alert the player in advance to the descent timing of the block groups that will subsequently fall. The descent rate of the blocks may be constant, but also may be varied for each rhythm pattern in order to change the degree of difficulty of the game or to provide some variation.

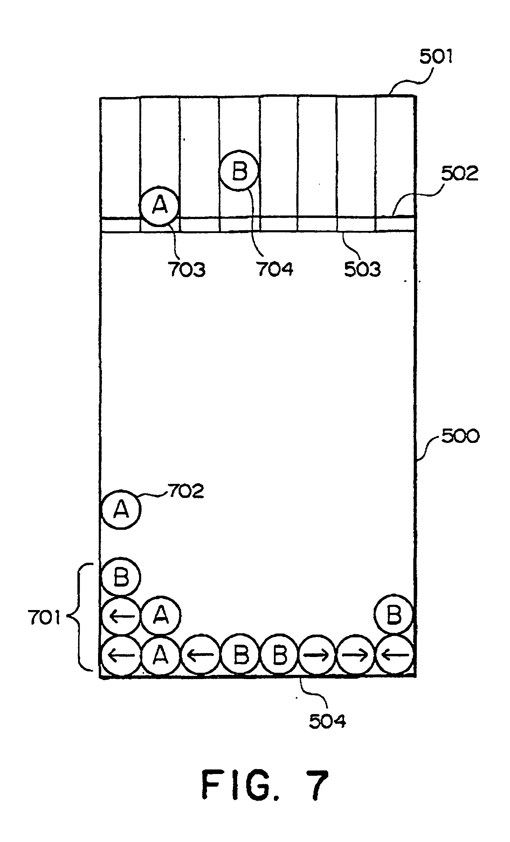

The blocks have initial block attributes assigned when they fall from the screen top 501 according to the rhythm pattern. The block attribute is an attribute corresponding to a directional key or action key, and this block attribute is used in subsequently determining the block erasure condition. Fig. 7 shows the main component 500 a short time after the game has begun. A block group 701 consists of blocks that have already landed, and blocks 702 to 704 are currently falling blocks. The symbols "↑", "↓", "→", "←", "A", or "B" as displayed on each block are block attributes. Let us say that A and B are allocated to action buttons. The initial block attribute may be predetermined, or may be determined randomly for each individual block.

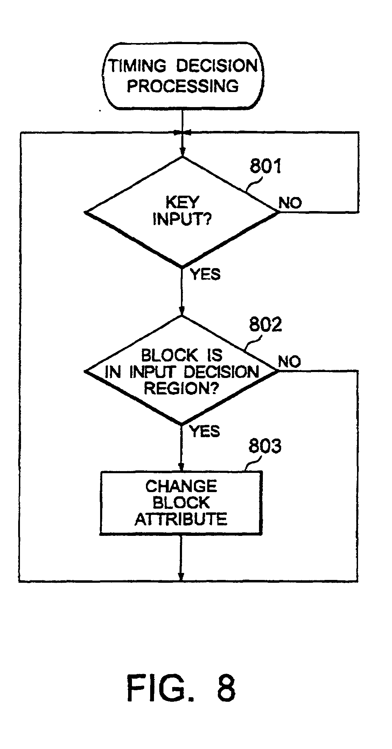

Thus, the blocks fall from the top of the screen with assigned block attributes, but the player can change the block attribute to any other block attribute by performing key input in time. This timing decision processing will now be described through reference to Fig. 8. Timing decision processing involves monitoring whether or not there is key input from a direction key or action key (step 801). If there is no key input, the blocks continue to land at the screen bottom 504 with their initial block attributes unchanged. If key input is detected, however, a decision is made as to whether a block is in the input decision region (step 802), and if it is, then a block attribute corresponding to that key is assigned to the block passing through the input decision region regardless of its initial block attribute (step 803). The player decides which block attribute the block will have when it falls onto the block group 701, and presses the key corresponding to the desired block attribute in the rhythm pattern. In the state in Fig. 7, block 703 is currently touching the input decision region, so the player can change its block attribute by pressing a key.

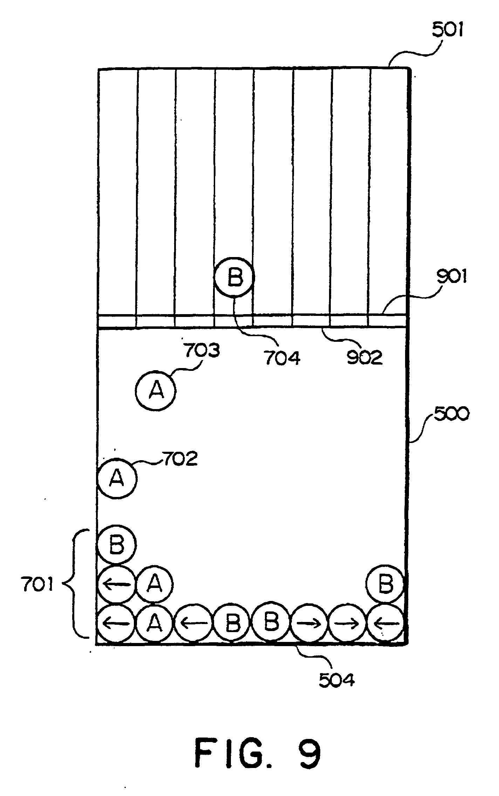

Thus, with the falling object puzzle of the present invention, it is important for the key input to be timed to the passage of the blocks through the input decision region. Accordingly, the degree of difficulty can be adjusted by changing the descent rate of the blocks, just as with a conventional falling object puzzle, but in addition to this, there is an adjustment for degree of difficulty that is unique to the falling object puzzle of the present invention. For instance, when the input decision region is lowered on the screen as shown in Fig. 9, the time it takes for the blocks to pass through the input decision region after the player hears the rhythm will be different even though the blocks are still falling at the same rate, so the player must readjust the timing at which he presses the keys.

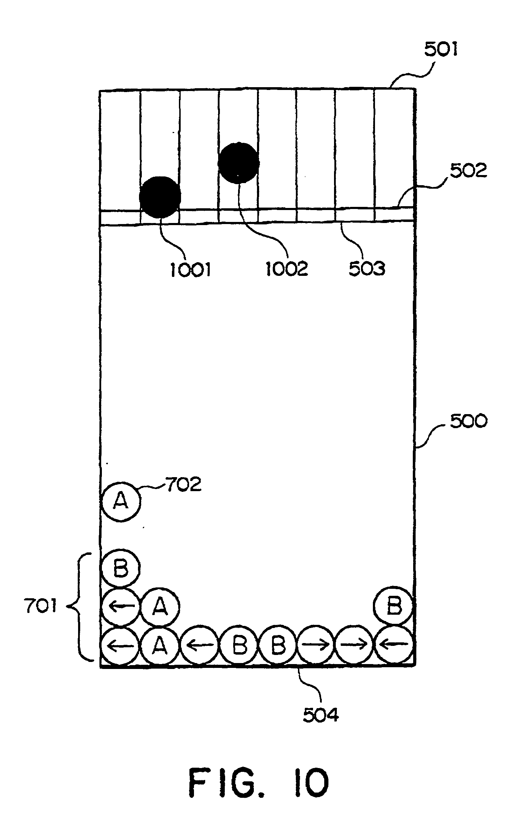

Also, a variation on the game can be achieved by displaying just the location of the blocks in the screen region above the input decision region, and not displaying the block attributes, as with blocks 1001 and 1002 in Fig. 10. In this case, it is further possible to notify the player that the input operation was not timed correctly. Specifically, if an input operation is performed before a block reaches the input decision region, that block can be marked with an "×," and the initial block attribute displayed only after the block has passed through the input decision region.

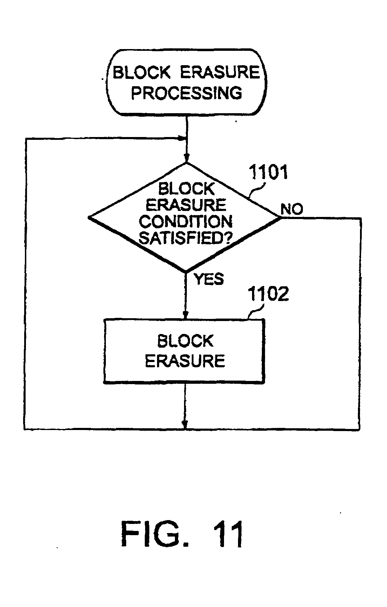

Next, the erasure of blocks that have landed at the screen bottom 504, that is, block erasure processing, will be described through reference to Fig. 11. Every time a block lands at the screen bottom 504 or on top of other blocks that have already landed, a decision is made as to whether the block erasure condition has been satisfied (step 1101), and if it has, that block is erased (step 1102). As a result, even though the blocks keep falling one after another from the screen top 501, the blocks will not overflow from the main component 500, allowing the game to continue.

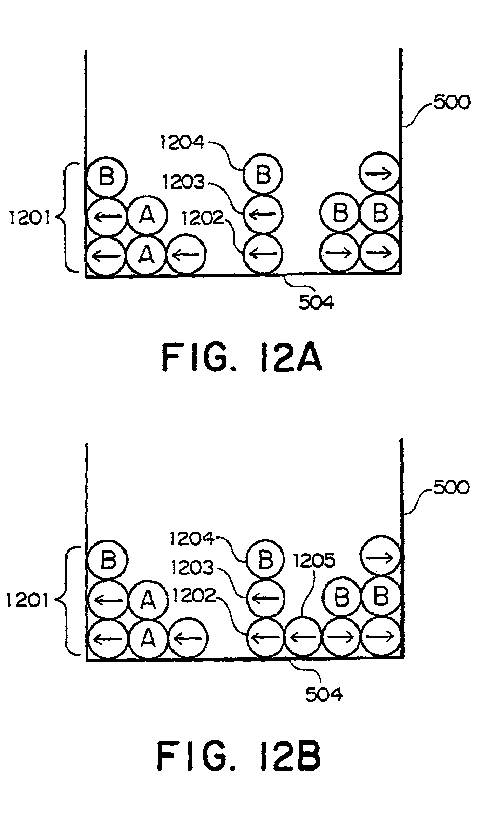

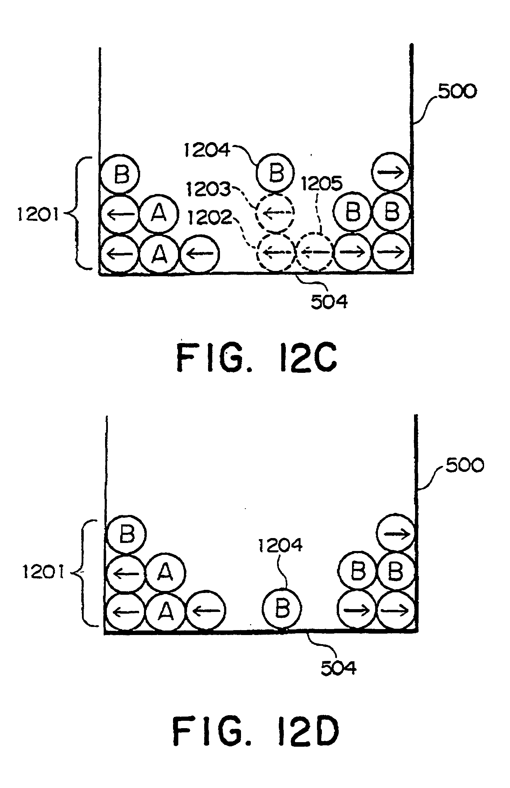

An example of the block erasure condition will be given to describe the process of block erasure. Here, we will define the block erasure condition as being that "three or more blocks having the same block attribute are adjacent either vertically, horizontally, or diagonally." In Fig. 12A there is a lane in which blocks 1202 and 1203 with an initial block attribute of "←" and a block of "B" are stacked vertically, and when a block 1205 of "←" falls to the right of this lane as shown in Fig. 12B, the above-mentioned condition is satisfied, so the blocks 1202, 1203, and 1205 are erased as shown in Fig. 12C, and the block 1204 that had been resting on top of the blocks 1202 and 1203 falls to the screen bottom 504 as shown in Fig 12D. A plurality of these block erasure conditions may be provided, in which case more points can be awarded for satisfying a block erasure condition with a higher degree of difficulty so in addition to continuing the game itself, the goal of trying to beat the high score can be provided to the player.

Up to this point we have described the falling of six types of block to which have been assigned block attributes of ↑, ↓, →, ←, A, or B, but special blocks other than these can be added to the types of blocks that fall. An example of a special block would be one that erases blocks that are adjacent vertically, horizontally, and diagonally at their landing point, regardless of the type of key pressed in the input decision region.

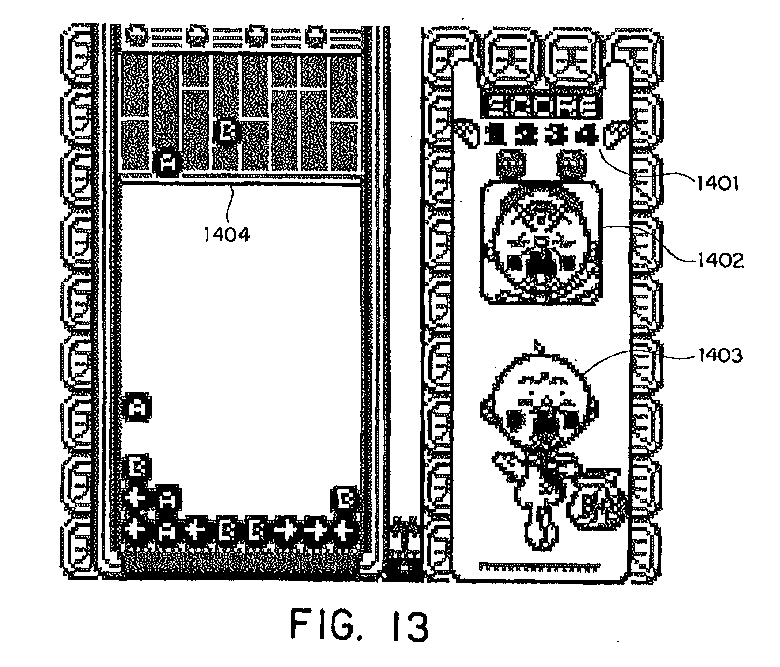

Fig. 13 shows an example of a screen configuration provided with a score display. Score display 1401 is shown along with character displays 1402 and 1403, in addition to the main component.

Thus, the player rhythmically changes the block attributes of the blocks falling one after another, and erases the block groups 508 that have stacked up at the screen bottom 504. The game is over when the stacked block groups reach a predetermined height, such as the input decision region bottom 503.

In addition to this condition for the game being over, it is also possible to provide a condition for reorganizing the progress of the game. For instance, if the game-over condition has not been satisfied by the cycle from the sounding of the rhythm pattern to the determination of the block erasure condition has been repeated a predetermined number of times, then one stage is deemed to have been completed, and a new stage is commenced. The blocks that have stacked up at the bottom of the screen are all erased at this point, and the situation returns to how it was at the start of the game, but the score is carried over from the previous stage. With this setup, how far the game has progressed into the stage becomes important to the player, and the state of progress of the stage can be displayed to the player by displaying on the screen a gauge that extends or moves as time elapses, for example.

The description up to now has been for a case in which the falling object puzzle of the present invention is played by a single player, but it can also be played by a plurality of players. For instance, the game program of the present invention may be executed on both of two portable game machines 110 connected by a cable, and the same rhythm pattern generated on both of the portable game machines 110. Play proceeds alternately after each rhythm pattern. The same rhythm pattern is used, but the block attributes of the falling blocks may be different on the two machines. The two players can compete against each other by assessing one player with a penalty corresponding to the degree of difficulty of the satisfied block erasure condition if the other player satisfies the block erasure condition. As an example of a penalty, when one player erases a series of blocks with a plurality of types of block attributes with the drop of a single block, then blocks will be dropped at a timing that does not match the rhythm pattern on the screen of the other player.

As a hardware configuration for competitive play, a plurality of input devices may be provided to a single video game device 300, the screen partitioned so that a plurality of main components 500 are displayed, and communication performed between the two processes.

The falling object puzzle of the present invention requires a player to perform key input that matches a rhythm pattern, so not only can players new to the game enjoy the process of building their skill, but advanced players can have the fun of moving to the rhythm.

Also, with the present invention, a rhythmic sound is emitted prior to the dropping of the blocks, and the blocks are dropped according to this rhythm, so the rhythm is essential to solving the falling object puzzle. This makes the game interesting to the player not only visually but aurally as well.

The present invention was described above through embodiments, but the present invention is not limited to or by these, and can, of course, be modified or improved within the ordinary scope of knowledge of a person skilled in the art.

## Claims

1. A computer-readable storage medium which records a video game program to be executed by a game device which comprises a data processor, an input device, and a display device for displaying blocks, said video game program being for executing a video game such that blocks fall from the top of a screen and are stacked at the bottom of the screen, each of the blocks having a pre-assigned block attribute which determines a type of each block, the stacked blocks being erased when a specific block erasure condition is met, **characterized in that** said video game program comprises the steps of
generating sounds in a specific rhythm pattern;
dropping a block from the top of the screen of said display device at a timing corresponding to said rhythm pattern;
deciding whether a key input is given from said input device at a time instant when the block passes an input decision region provided at a specific location within the screen;
assigning said block attribute corresponding to the inputted key to the block passing through said step of deciding, regardless of the block attribute that was pre-assigned, when it is decided in said step of deciding that the key input is given at the time instant, and, otherwise, assigning no block attribute of the block and;
evaluating said block erasure condition on the basis of the layout of the stacked blocks and said block attribute to erase each block when it satisfies said block erasure condition from the screen of said display device.

2. The recording medium on which is recorded a video game program according to Claim 1, **characterized in that** said blocks fall from the top of the screen along one or a plurality of lanes set perpendicular to the bottom of the screen.

3. The recording medium on which is recorded a video game program according to Claim 1 or 2, wherein said block erasure condition is that a plurality of blocks having the same said block attribute be adjacent for at least a predetermined number either vertically, horizontally, or diagonally.

4. The recording medium on which is recorded a video game program according to Claims 1, 2, or 3, wherein the location of a block is displayed in a specific region within the screen, but said block attribute of this block is not displayed.

5. The recording medium on which is recorded a video game program according to Claims 1, 2, 3, or 4, wherein said video game program further comprises a step in which communication is performed between a plurality of video game devices operating according to said video game program.

6. The recording medium on which is recorded a video game program according to Claim 5, **characterized in that** said video game program further comprises:
a step in which a signal is transmitted to the other video game devices to notify them when said predetermined block erasure condition is satisfied; and
a step in which blocks are dropped in addition to the blocks falling at a timing corresponding to said rhythm pattern when said signal is received from the other video game devices.

7. The recording medium according to any one of claims 1 to 6, wherein
. said video game program further comprises a step in which said video game program is executed for each of a plurality of regions into which a display device of a single video game device has been divided, and communication is performed between one of said plurality of regions and the other regions.

8. A video game device **characterized by** comprising:
input means for converting the operation by a player into signals;
audio output means for making sounds according to a specific rhythm pattern;
display means for displaying blocks that fall from the top of the screen at a timing corresponding to said rhythm pattern and stack up at the bottom of the screen, and an input decision region provided at a specific location within the screen;
means for assigning the said blocks a block attribute indicating the type;
input decision means for deciding whether there has been input from said input means while a block passes through said input decision region;
means for assigning to the block passing through said input decision region a block attribute corresponding to the inputted key, regardless of the block attribute that was pre-assigned, when it is decided by said input decision means that there has been a key input, and not affecting said block attribute of the block when it is decided by said input decision means that there is no key input; and
means for evaluating block erasure condition on the basis of the layout of the stacked blocks and said block attributes, and erasing from the screen of said display means any blocks that satisfy said block erasure condition.

9. The video game device according to Claim 8, **characterized in that** said blocks fall from the top of the screen along one or a plurality of lanes set perpendicular to the bottom of the screen.

10. The video game device according to Claim 8 or 9, wherein
said block erasure condition is that a plurality of blocks having the same said block attribute be adjacent for at least a predetermined number either vertically, horizontally, or diagonally.

11. The video game device according to Claims 8, 9, or 10, wherein
said display means displays the location of a block in a specific region within the screen, but does not display said block attribute of this block.

12. The video game device according to Claims 8, 9, 10, or 11, further comprising means for communicating with other video game devices.

13. The video game device according to Claim 12, **characterized by** further comprising:
means for transmitting a signal to the other video game devices to notify them when said predetermined block erasure condition is satisfied;
means for receiving said signal from the other video game devices; and
means for dropping blocks in addition to the blocks falling at a timing corresponding to said rhythm pattern when said signal is received from the other video game devices.

14. The video game device according to any one of Claims 8 to 13, comprising a plurality of said input means, display means, and audio output means corresponding to a plurality of players.

## Patentansprüche

1. Computerlesbares Speichermedium, auf dem ein Videospielprogramm gespeichert ist, das dazu geeignet ist, durch eine Spielvorrichtung ausgeführt zu werden, die einen Datenprozessor, eine Eingabeeinrichtung und eine Anzeige bzw. Display zum Darstellen von Blöcken aufweist, wobei das Videospielprogramm dazu dient, ein Videospiel auszuführen, gemäß dem Blöcke von der Oberseite eines Bildschirms herabfallen und sich auf der Unterseite des Bildschirms stapeln, wobei jedem der Blöcke im voraus ein Blockattribut zugewiesen wird, das einen Typ jedes Blocks bestimmt, wobei die gestapelten Blöcke gelöscht werden, wenn eine spezifische Blocklöschbedingung erfüllt ist;
**dadurch gekennzeichnet, daß** das Videospielprogramm die Schritte aufweist:
Erzeugen von Tönen in einem spezifischen Rhythmusmuster;
Veranlassen, daß Blöcke von der Oberseite des Bildschirms des Displays mit einer dem Rhythmusmuster entsprechenden Zeitvorgabe bzw. Timing herabfallen;
Entscheiden, ob zu einem Zeitpunkt, an dem ein Block einen an einer bestimmten Stelle auf dem Bildschirm bereitgestellten Eingabeentscheidungsbereich passiert, eine Tasteneingabe über die Eingabeeinrichtung erfolgt;
Zuweisen des der Eingabetaste entsprechenden Blockattributs zum Block, der den Entscheidungsschritt durchläuft, unabhängig vom im voraus zugewiesenen Blockattribut, wenn im Entscheidungsschritt entschieden wurde, daß die Tasteneingabe zu dem Zeitpunkt erfolgt ist, wobei andernfalls dem Block kein Blockattribut zugewiesen wird; und
Beurteilen der Blocklöschbedingung auf der Basis der Struktur der gestapelten Blöcke und des Blockattributs, um jeden Block, wenn er die Blocklöschbedingung erfüllt, vom Bildschirm des Displays zu löschen.

2. Speichermedium nach Anspruch 1, **dadurch gekennzeichnet, daß** die Blöcke von der Oberseite des Bildschirms entlang einer oder mehreren Bahnen herabfallen, die sich senkrecht zur Unterseite des Bildschirms erstrecken.

3. Speichermedium nach Anspruch 1 oder 2, wobei die Blocklöschbedingung darin besteht, daß mindestens eine vorgegebene Anzahl von mehreren Blöcken mit dem gleichen Blockattribut vertikal, horizontal oder diagonal benachbart angeordnet sind.

4. Speichermedium nach Anspruch 1, 2 oder 3, wobei die Position eines Blocks in einem spezifischen Bereich des Bildschirms dargestellt wird, das Blockattribut dieses Blocks jedoch nicht dargestellt wird.

5. Speichermedium nach Anspruch 1, 2, 3 oder 4, wobei das Videospielprogramm ferner einen Schritt aufweist, in dem eine Kommunikation zwischen mehreren Videospielvorrichtungen ausgeführt wird, die eine Verarbeitung gemäß dem gleichen Videospielprogramm ausführen.

6. Speichermedium nach Anspruch 5, **dadurch gekennzeichnet, daß** das Videospielprogramm ferner aufweist:
einen Schritt, in dem ein Signal an die anderen Videospielvorrichtungen übertragen wird, um diese zu informieren, wenn die vorgegebene Blocklöschbedingung erfüllt ist; und
einen Schritt, in dem zusätzlich zu den Blöcken, die mit einem dem Rhythmusmuster entsprechenden Timing herabfallen, weitere Blöcke herabfallen, wenn das Signal von den anderen Videospielvorrichtungen empfangen wird.

7. Speichermedium nach einem der Ansprüche 1 bis 6, wobei das Videospielprogramm ferner einen Schritt aufweist, in dem das Videospielprogramm für jeden von mehreren Bereichen ausgeführt wird, in die ein Display einer einzelnen Videospielvorrichtung geteilt worden ist, und wobei eine Kommunikation zwischen einem der mehreren Bereiche und den anderen Bereichen ausgeführt wird.

8. Videospielvorrichtung mit:
einer Eingabevorrichtung zum Umwandeln eines Eingabebefehls eines Spielers in Signale;
einer Audioausgabeeinrichtung zum Erzeugen von Tönen gemäß einem spezifischen Rhythmusmuster;
einer Anzeige bzw. Display zum Darstellen von Blöcken, die mit einer dem Rhythmusmuster entsprechenden Zeitvorgabe bzw. Timing von der Oberseite des Bildschirms herabfallen und sich an der Unterseite des Bildschirms stapeln, und zum Darstellen eines Eingabeentscheidungsbereichs an einer spezifischen Stelle des Bildschirms;
einer Einrichtung zum Zuweisen eines einen Typ anzeigenden Blockattributs zu den Blöcken;
einer Eingabeentscheidungseinrichtung zum Entscheiden, ob eine Eingabe über die Eingabeeinrichtung vorgenommen wurde, während ein Block den Eingabeentscheidungsbereich durchläuft;
einer Einrichtung zum Zuweisen eines der Eingabetaste entsprechenden Blockattributs zum Block, der den Eingabeentscheidungsbereich durchläuft, unabhängig vom zuvor zugewiesenen Blockattribut, wenn durch die Eingabeentscheidungseinrichtung entschieden wurde, daß eine Tasteneingabe vorgenommen worden ist, wobei das Blockattribut des Blocks nicht beeinflußt wird, wenn durch die Eingabeentscheidungseinrichtung entschieden wird, daß keine Tasteneingabe vorgenommen wurde; und
einer Einrichtung zum Beurteilen der Blocklöschbedingung auf der Basis der Struktur der gestapelten Blöcke und der Blockattribute und zum Löschen jeglicher Blöcke, die die Blocklöschbedingung erfüllen, vom Bildschirm des Displays.

9. Vorrichtung nach Anspruch 8, **dadurch gekennzeichnet, daß** die Blöcke von der Oberseite des Bildschirms entlang einer oder mehreren Bahnen herabfallen, die sich senkrecht zur Unterseite des Bildschirms erstrecken.

10. Vorrichtung nach Anspruch 8 oder 9, wobei die Blocklöschbedingung darin besteht, daß mindestens eine vorgegebene Anzahl von Blöcken mit dem gleichen Blockattribut vertikal, horizontal oder diagonal benachbart angeordnet sind.

11. Vorrichtung nach Anspruch 8, 9 oder 10, wobei das Display die Position eines Blocks in einem spezifischen Bereich des Bildschirms darstellt, das Blockattribut dieses Blocks jedoch nicht darstellt.

12. Vorrichtung nach Anspruch 8, 9, 10 oder 11, ferner mit einer Einrichtung, die eine Kommunikation mit anderen Videospielvorrichtungen ermöglicht.

13. Vorrichtung nach Anspruch 12, ferner mit:
einer Einrichtung zum Übertragen eines Signals an die anderen Videospielvorrichtungen, um diese zu informieren, wenn die vorgegebene Blocklöschbedingung erfüllt ist;
einer Einrichtung zum Empfangen des Signals von den anderen Videospielvorrichtungen; und
einer Einrichtung, die veranlaßt, daß zusätzlich zu den Blöcken, die mit einem dem Rhythmusmuster entsprechenden Timing herabfallen, weitere Blöcke herabfallen, wenn das Signal von den anderen Videospielvorrichtungen empfangen wird.

14. Vorrichtung nach einem der Ansprüche 8 bis 13,
mit einer einer Vielzahl von Spielern entsprechenden Anzahl von Eingabeeinrichtungen, Displays und Audioausgabeeinrichtungen.

## Revendications

1. Support d'enregistrement lisible par ordinateur sur lequel est enregistré un programme de jeu vidéo à exécuter par un dispositif de jeu qui comprend un processeur de données, un dispositif d'entrée, et un dispositif d'affichage pour afficher des blocs, le programme de jeu vidéo étant destiné à exécuter un jeu vidéo tel que des blocs tombent du haut d'un écran et sont empilés au bas de l'écran, chacun des blocs ayant un attribut de bloc pré-affecté qui détermine un type de chaque bloc, les blocs empilés étant effacés lorsqu'une condition d'effacement de blocs spécifique est remplie,
**caractérisé en ce que**
le programme de jeu vidéo comprend les étapes consistant à :
- générer des sons dans une structure rythmique spécifique ;
- lâcher un bloc du haut de l'écran du dispositif d'affichage à un rythme correspondant à la structure rythmique ;
- décider si une entrée par touche est effectuée à partir du dispositif d'entrée à un instant où le bloc traverse une zone de décision d'entrée située à un emplacement spécifique à l'intérieur de l'écran ;
- affecter l'attribut de bloc correspondant à la touche activée au bloc traversant l'étape de décision, sans tenir compte de l'attribut de bloc qui a été pré-affecté, lorsqu'il est décidé dans l'étape de décision que l'entrée par touche est effectuée à l'instant concerné, et sinon, ne pas affecter d'attribut de bloc au bloc ; et
- évaluer la condition d'effacement de blocs sur la base de la disposition des blocs empilés et de l'attribut de bloc pour effacer de l'écran du dispositif d'affichage chaque bloc lorsqu'il remplit la condition d'effacement de blocs.

2. Support d'enregistrement sur lequel est enregistré un programme de jeu vidéo selon la revendication 1,
**caractérisé en ce que**
les blocs tombent du haut de l'écran le long d'un ou d'une pluralité de chemins établis perpendiculairement au bas de l'écran.

3. Support d'enregistrement sur lequel est enregistré un programme de jeu vidéo selon la revendication 1 ou 2,
dans lequel la condition d'effacement de blocs est qu'une pluralité de blocs ayant le même attribut de bloc soient adjacents pour au moins un nombre prédéterminé, soit verticalement, soit horizontalement, soit en diagonale.

4. Support d'enregistrement sur lequel est enregistré un programme de jeu vidéo selon les revendications 1, 2 ou 3,
dans lequel l'emplacement d'un bloc est affiché dans une zone spécifique à l'intérieur de l'écran, mais l'attribut de bloc de ce bloc n'est pas affiché.

5. Support d'enregistrement sur lequel est enregistré un programme de jeu vidéo selon les revendications 1, 2, 3 ou 4,
dans lequel le programme de jeu vidéo comprend en outre une étape
dans laquelle une communication est établie entre une pluralité de dispositifs de jeu vidéo fonctionnant selon le programme de jeu vidéo.

6. Support d'enregistrement sur lequel est enregistré un programme de jeu vidéo selon la revendication 5,
**caractérisé en ce que**
le programme de jeu vidéo comprend en outre :
- une étape dans laquelle un signal est transmis aux autres dispositifs de jeu vidéo pour leur notifier quand la condition d'effacement de blocs prédéterminée est remplie ; et
- une étape dans laquelle des blocs sont lâchés en plus des blocs tombant à un rythme correspondant à la structure rythmique lorsque le signal est reçu des autres dispositifs de jeu vidéo.

7. Support d'enregistrement selon l'une quelconque des revendications 1 à 6,
dans lequel le programme de jeu vidéo comprend en outre une étape dans laquelle le programme de jeu vidéo est exécuté pour chaque zone d'une pluralité de zones dans lesquelles un dispositif d'affichage d'un dispositif de jeu vidéo unique a été divisé, et une communication est établie entre une zone de la pluralité de zones et les autres zones.

8. Dispositif de jeu vidéo
**caractérisé en ce qu'**
il comprend :
- un moyen d'entrée pour convertir l'action d'un joueur en signaux ;
- un moyen de sortie audio pour créer des sons selon une structure rythmique spécifique ;
- un moyen d'affichage pour afficher des blocs qui tombent du haut de l'écran à un rythme correspondant à la structure rythmique et s'empilent au bas de l'écran, et une zone de décision d'entrée située à un emplacement spécifique à l'intérieur de l'écran ;
- un moyen pour affecter aux blocs un attribut de bloc indiquant le type ;
- un moyen de décision d'entrée pour décider s'il y a eu une entrée à partir du moyen d'entrée tandis qu'un bloc traversait la zone de décision d'entrée ;
- un moyen pour affecter au bloc traversant la zone de décision d'entrée un attribut de bloc correspondant à la touche activée, sans tenir compte de l'attribut de bloc qui a été pré-affecté, lorsqu'il est décidé par le moyen de décision d'entrée qu'il y a eu une entrée par touche, et ne pas affecter l'attribut de bloc au bloc lorsqu'il est décidé par le moyen de décision d'entrée qu'il n'y a pas eu d'entrée par touche ; et
- un moyen pour évaluer la condition d'effacement de blocs sur la base de la disposition des blocs empilés et des attributs de blocs, et effacer de l'écran du moyen d'affichage tous les blocs qui remplissent la condition d'effacement de blocs.

9. Dispositif de jeu vidéo selon la revendication 8,
**caractérisé en ce que**
les blocs tombent du haut de l'écran le long d'un ou d'une pluralité de chemins établis perpendiculairement au bas de l'écran.

10. Dispositif de jeu vidéo selon la revendication 8 ou 9,
dans lequel la condition d'effacement de blocs est qu'une pluralité de blocs ayant le même attribut de bloc soient adjacents pour au moins un nombre prédéterminé, soit verticalement, soit horizontalement, soit en diagonale.

11. Dispositif de jeu vidéo selon les revendications 8, 9 ou 10,
dans lequel le moyen d'affichage affiche l'emplacement d'un bloc dans une zone spécifique à l'intérieur de l'écran, mais n'affiche pas l'attribut de bloc de ce bloc.

12. Dispositif de jeu vidéo selon les revendications 8, 9, 10 ou 11, comprenant en outre un moyen pour communiquer avec d'autres dispositifs de jeu vidéo.

13. Dispositif de jeu vidéo selon la revendication 12,
**caractérisé en ce qu'**
il comprend en outre :
- un moyen pour transmettre un signal aux autres dispositifs de jeu vidéo pour leur notifier quand la condition d'effacement de blocs prédéterminée est remplie ;
- un moyen pour recevoir le signal des autres dispositifs de jeu vidéo ; et
- un moyen pour lâcher des blocs en plus des blocs tombant à un rythme correspondant à la structure rythmique lorsque le signal est reçu des autres dispositifs de jeu vidéo.

14. Dispositif de jeu vidéo selon l'une quelconque des revendications 8 à 13, comprenant une pluralité de moyens d'entrée, de moyens d'affichage et de moyens de sortie audio correspondant à une pluralité de joueurs.
